(19) **Europäisches Patentamt / European Patent Office / Office européen des brevets**

(11) **EP 4 770 175 A1**

(12) **EUROPEAN PATENT APPLICATION**
published in accordance with Art. 153(4) EPC

(43) Date of publication:
**01.07.2026 Bulletin 2026/27**

(21) Application number: **24870520.4**

(22) Date of filing: **18.09.2024**

(51) International Patent Classification (IPC):
**H04W 24/02** (2009.01)

(52) Cooperative Patent Classification (CPC):
**H04W 24/02; H04W 52/02; H04W 76/27; H04W 76/28**

(86) International application number:
**PCT/CN2024/119380**

(87) International publication number:
**WO 2025/066976 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023 CN 202311250193**

(71) Applicant: **HUAWEI TECHNOLOGIES CO., LTD.**
**Shenzhen 518129 (CN)**

(72) Inventors:
• **YU, Tong**
**Shenzhen, Guangdong 518129 (CN)**

• **ZHANG, Xiaoyu**
**Shenzhen, Guangdong 518129 (CN)**
• **SHI, Meng**
**Shenzhen, Guangdong 518129 (CN)**
• **LIAO, Shuri**
**Shenzhen, Guangdong 518129 (CN)**
• **DOU, Shengyue**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) This application provides a communication method and apparatus, to address an issue of poor energy saving performance when a DRX-based terminal device performs SSB detection. The method includes: receiving SMTC configuration information, where the SMTC configuration information includes periodicity and a start position of an SMTC window; determining a cycle period of DRX based on the periodicity of the SMTC window; and determining a start position of the DRX based on the start position of the SMTC window. In embodiments of this application, the SMTC window and the DRX are indicated in an associated manner. This allows a network device to configure the SMTC window and the DRX by using a uniform parameter, eliminating overhead caused by a plurality of times of RRC reconfiguration.

Terminal device | Network device

S401: SMTC configuration information

S402: Determine DRX configuration information based on configuration information of an SMTC window

S403: Determine the DRX configuration information based on the configuration information of the SMTC window

FIG. 4

**Description**

CROSS-REFERENCE TO RELATED APPLICATIONS

This application claims priority to Chinese Patent Application No. 202311250193.1, filed with the China National Intellectual Property Administration on September 25, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

To reduce energy consumption in terminal devices caused by continuous monitoring a physical downlink control channel (physical downlink control channel, PDCCH), a discontinuous reception (discontinuous reception, DRX) mechanism is introduced. Each DRX cycle includes an active period (called On Duration) and a dormant period. In the active period, a terminal device is in a wake-up (wake-up) state and monitors the PDCCH. In the dormant period, the terminal device stops monitoring the PDCCH, to implement energy saving. A longer dormant period indicates a better terminal energy saving effect.

In satellite communication scenarios, the synchronization signal/physical broadcast channel block (synchronization signal/physical broadcast channel block, SSB) index (index) for a terminal device changes as a satellite moves. Consequently, an SSB may arrive while the terminal device is in the dormant period, leading to poor energy-saving performance.

SUMMARY

This application provides a communication method and apparatus, to address an issue of poor energy saving performance when a DRX-based terminal device performs SSB detection.

According to a first aspect, a communication method is provided. An execution body of the method may be a terminal device or a chip, a chip system, or a circuit located in the terminal device. The method may be implemented according to the following steps: receiving SMTC configuration information, where the SMTC configuration information includes periodicity of an SMTC window and a start position of the SMTC window; determining a cycle period of DRX based on the periodicity of the SMTC window; and determining a start position of the DRX based on the start position of the SMTC window.

In this embodiment of this application, the SMTC window and the DRX are indicated in an association, so that a network device may configure the SMTC window and the DRX by using a uniform parameter, eliminating overhead caused by a plurality of times of RRC reconfiguration.

In a possible design, the cycle period of the DRX is N times the periodicity of the SMTC window, where N is an integer. This design establishes an association between the cycle period of the DRX and the periodicity of the SMTC window.

In a possible design, N is a default value or is configured by the network device.

In a possible design, a relationship between the start position of the SMTC window and the start position of the DRX satisfies the following formula:

$$\text{drx-StartOffset} = \text{periodicityAndOffset mod drx-Cycle,}$$

where
drx-StartOffset is the start position of the DRX, periodicityAndOffset is the start position of the SMTC window, drx-Cycle is the cycle period of the DRX, and mod is a modulo operation.

This design can ensure that the start position of the SMTC window is the same as the start position of the DRX.

In a possible design, a relationship between the start position of the SMTC window and the start position of the DRX satisfies the following formula:

$$\text{drx-StartOffset} = \text{periodicityAndOffset mod drx-Cycle} + \text{offset1,}$$

where
offset1 is an offset greater than 0 and offset1 is indicated by the network device, or offset1 is determined based on the periodicity of the SMTC window or the cycle period of the DRX, or offset1 is a preset value.

This design can ensure a fixed relative offset between the start position of the SMTC window and the start position of the DRX.

In a possible design, a relationship between the start position of the SMTC window and the start position of the DRX satisfies the following formula:

$$\text{drx-StartOffset} = \text{periodicityAndOffset} \bmod \text{drx-Cycle} - \text{offset2},$$

where
offset2 is an offset greater than 0 and offset2 is indicated by the network device, or offset2 is determined based on the periodicity of the SMTC window or the cycle period of the DRX, or offset2 is a preset value.

This design can ensure a fixed relative offset between the start position of the SMTC window and the start position of the DRX.

In a possible design, the SMTC configuration information further includes duration of the SMTC window, and the method further includes: determining on duration in the DRX based on the duration of the SMTC window. This design establishes an association between the duration of the SMTC window and the on duration in the DRX.

In a possible design, a relationship between the on duration and the duration of the SMTC window is one of the following:

the on duration is the same as the duration of the SMTC window; or
the on duration is M times the duration of the SMTC window, where M is an integer; or
the on duration has a forward offset of X1 compared with the duration of the SMTC window, where X1 is a positive integer; or
the on duration has a backward offset of X2 compared with the duration of the SMTC window, where X2 is a positive integer.

This design can ensure the alignment of the SMTC window with the on duration of the DRX. Consequently, when an SSB arrives at a terminal device, the terminal device is precisely in the on duration. In this way, the terminal device only needs to wake up once to complete PDCCH detection and SSB detection, thereby reducing energy consumption on the terminal device.

In a possible design, the method further includes: receiving indication information, where the indication information indicates the relationship between the on duration and the duration of the SMTC window.

According to a second aspect, a communication method is provided. An execution body of the method may be a network device or a chip, a chip system, or a circuit located in the network device. The method may be implemented according to the following steps: sending SMTC configuration information, where the SMTC configuration information includes periodicity of an SMTC window and a start position of the SMTC window; determining a cycle period of DRX based on the periodicity of the SMTC window; and determining a start position of the DRX based on the start position of the SMTC window.

In this embodiment of this application, the SMTC window and the DRX are indicated in an association, so that the network device may configure the SMTC window and the DRX by using a uniform parameter, eliminating overhead caused by a plurality of times of RRC reconfiguration.

In a possible design, the cycle period of the DRX is N times the periodicity of the SMTC window, where N is an integer. This design establishes an association between the cycle period of the DRX and the periodicity of the SMTC window.

In a possible design, N is a default value or is configured by the network device.

In a possible design, a relationship between the start position of the SMTC window and the start position of the DRX satisfies the following formula:

$$\text{drx-StartOffset} = \text{periodicityAndOffset} \bmod \text{drx-Cycle},$$

where
drx-StartOffset is the start position of the DRX, periodicityAndOffset is the start position of the SMTC window, drx-Cycle is the cycle period of the DRX, and mod is a modulo operation.

This design can ensure that the start position of the SMTC window is the same as the start position of the DRX.

In a possible design, a relationship between the start position of the SMTC window and the start position of the DRX satisfies the following formula:

$$drx\text{-}StartOffset = periodicityAndOffset \bmod drx\text{-}Cycle + offset1,$$

where
offset1 is an offset greater than 0 and offset1 is indicated by the network device, or offset1 is determined based on the periodicity of the SMTC window or the cycle period of the DRX, or offset1 is a preset value.

This design can ensure a fixed relative offset between the start position of the SMTC window and the start position of the DRX.

In a possible design, a relationship between the start position of the SMTC window and the start position of the DRX satisfies the following formula:

$$drx\text{-}StartOffset = periodicityAndOffset \bmod drx\text{-}Cycle - offset2,$$

where
offset2 is an offset greater than 0 and offset2 is indicated by the network device, or offset2 is determined based on the periodicity of the SMTC window or the cycle period of the DRX, or offset2 is a preset value.

This design can ensure a fixed relative offset between the start position of the SMTC window and the start position of the DRX.

In a possible design, the SMTC configuration information further includes duration of the SMTC window, and the method further includes: determining on duration in the DRX based on the duration of the SMTC window. This design establishes an association between the duration of the SMTC window and the on duration in the DRX.

In a possible design, a relationship between the on duration and the duration of the SMTC window is one of the following:

the on duration is the same as the duration of the SMTC window; or
the on duration is M times the duration of the SMTC window, where M is an integer; or
the on duration has a forward offset of X1 compared with the duration of the SMTC window, where X1 is a positive integer; or
the on duration has a backward offset of X2 compared with the duration of the SMTC window, where X2 is a positive integer.

This design can ensure the alignment of the SMTC window with the on duration of the DRX. Consequently, when an SSB arrives at a terminal device, the terminal device is precisely in the on duration. In this way, the terminal device only needs to wake up once to complete PDCCH detection and SSB detection, thereby reducing energy consumption on the terminal device.

In a possible design, the method further includes: sending indication information, where the indication information indicates the relationship between the on duration and the duration of the SMTC window.

According to a third aspect, a communication method is provided. An execution body of the method may be a terminal device or a chip, a chip system, or a circuit located in the terminal device. The method may be implemented according to the following steps: receiving a MAC CE, where the MAC CE indicates a start position of DRX; and determining the start position of the DRX based on the MAC CE.

In this embodiment of this application, the MAC CE indicates the start position of the DRX or a change in the start position of the DRX, so that DRX configuration overhead can be reduced.

In a possible design, n1 padding bytes in the MAC CE indicate the start position of the DRX, where n1 is an integer greater than 0.

In a possible design, n2 padding bytes in the MAC CE indicate an offset of the start position of the DRX relative to a start position of first DRX, where n2 is an integer greater than 0.

In a possible design, n3 padding bytes in the MAC CE indicate an offset of a start position of on duration in the DRX relative to the start position of the DRX, where n3 is an integer greater than 0.

According to a fourth aspect, a communication method is provided. An execution body of the method may be a network device or a chip, a chip system, or a circuit located in the network device. The method may be implemented according to the following steps: determining a MAC CE, where the MAC CE indicates a start position of DRX; and sending the MAC CE.

In this embodiment of this application, the MAC CE indicates the start position of the DRX or a change in the start position of the DRX, so that DRX configuration overhead can be reduced.

In a possible design, n1 padding bytes in the MAC CE indicate the start position of the DRX, where n1 is an integer greater than 0.

In a possible design, n2 padding bytes in the MAC CE indicate an offset of the start position of the DRX relative to a start position of first DRX, where n2 is an integer greater than 0.

In a possible design, n3 padding bytes in the MAC CE indicate an offset of a start position of on duration in the DRX relative to the start position of the DRX, where n3 is an integer greater than 0.

According to a fifth aspect, a communication method is provided. An execution body of the method may be a terminal device or a chip, a chip system, or a circuit located in the terminal device. The method may be implemented according to the following steps: receiving a MAC CE, where the MAC CE indicates an SMTC window; and determining the SMTC window based on the MAC CE.

In this embodiment of this application, the MAC CE indicates a change in the SMTC window, so that overhead on the terminal device for frequent SMTC window reconfigurations induced by satellite movement can be reduced.

In a possible design, that the MAC CE indicates the SMTC window includes: The MAC CE indicates at least one piece of the following information: periodicity of the SMTC window, a start position of the SMTC window, or duration of the SMTC window.

In a possible design, n padding bytes in the MAC CE indicate the SMTC window, where n is an integer greater than 0.

In a possible design, that the MAC CE indicates the SMTC window includes: The MAC CE is used to activate one set of SMTC configuration among a plurality of sets of SMTC configurations, and any one set of the SMTC configuration among the plurality of sets of SMTC configurations includes at least one of the following parameters: periodicity of the SMTC window, a start position of the SMTC window, or duration of the SMTC window.

According to a sixth aspect, a communication method is provided. An execution body of the method may be a network device or a chip, a chip system, or a circuit located in the network device. The method may be implemented according to the following steps: determining a MAC CE, where the MAC CE indicates an SMTC window; and sending the MAC CE.

In this embodiment of this application, the MAC CE indicates a change in the SMTC window, so that overhead on the terminal device for frequent SMTC window reconfigurations induced by satellite movement can be reduced.

In a possible design, that the MAC CE indicates the SMTC window includes: The MAC CE indicates at least one piece of the following information: periodicity of the SMTC window, a start position of the SMTC window, or duration of the SMTC window.

In a possible design, n padding bytes in the MAC CE indicate the SMTC window, where n is an integer greater than 0.

In a possible design, that the MAC CE indicates the SMTC window includes: The MAC CE is used to activate one set of SMTC configuration among a plurality of sets of SMTC configurations, and any one set of the SMTC configuration among the plurality of sets of SMTC configurations includes at least one of the following parameters: periodicity of the SMTC window, a start position of the SMTC window, or duration of the SMTC window.

According to a seventh aspect, this application further provides a communication apparatus. The apparatus is a terminal device or a chip in the terminal device. The communication apparatus has a function of implementing any one of the methods provided in the first aspect, the third aspect, or the fifth aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing a corresponding function of the terminal device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a serving satellite, for example, sending and receiving of data or a signal. For example, the communication interface may be a transceiver, a circuit, a bus, a module, or another type of communication interface.

In a possible design, the communication apparatus includes corresponding functional modules, respectively configured to implement the steps in the foregoing methods. The function may be implemented by hardware, or may be implemented by hardware executing corresponding software. The hardware or the software includes one or more modules corresponding to the foregoing function.

In a possible design, a structure of the communication apparatus includes a processing unit (or a processing unit) and a communication unit (or a communication unit). These units may perform corresponding functions in the foregoing method examples. For details, refer to the descriptions of the method provided in the first aspect, the third aspect, or the fifth aspect. Details are not described herein again.

According to an eighth aspect, this application further provides a communication apparatus. The apparatus is a satellite or a chip in the satellite. The communication apparatus has a function of implementing any one of the methods provided in the second aspect, the fourth aspect, or the sixth aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing a corresponding function of a serving satellite in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device, for example, sending and receiving of data or a signal. For example, the communication interface may be a transceiver, a circuit, a bus, a module, or another type of communication interface.

In a possible design, the communication apparatus includes corresponding functional modules, respectively configured to implement the steps in the foregoing methods. The function may be implemented by hardware, or may be implemented by hardware executing corresponding software. The hardware or the software includes one or more modules corresponding to the foregoing function.

In a possible design, a structure of the communication apparatus includes a processing unit (or a processing unit) and a communication unit (or a communication unit). These units may perform corresponding functions in the foregoing method examples. For details, refer to the descriptions of the method provided in the second aspect, the fourth aspect, or the sixth aspect. Details are not described herein again.

According to a ninth aspect, a communication apparatus is provided. The communication apparatus includes a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement, through a logic circuit or by executing code instructions, the method according to the first aspect, the third aspect, or the fifth aspect and the method according to any one of the possible designs.

According to a tenth aspect, a communication apparatus is provided. The communication apparatus includes a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement, through a logic circuit or by executing code instructions, the method according to the second aspect, the fourth aspect, or the sixth aspect and the method according to any one of the possible designs.

According to an eleventh aspect, a computer-readable storage medium is provided. The computer-readable storage medium stores a computer program or instructions. When the computer program or the instructions are executed by a processor, the method according to any one of the first aspect to the sixth aspect and the possible designs are implemented.

According to a twelfth aspect, a computer program product storing instructions is provided. When the instructions are run by a processor, the method according to any one of the first aspect to the sixth aspect and the possible designs are implemented.

According to a thirteenth aspect, a chip system is provided. The chip system includes a processor, and may further include a memory, configured to implement the method according to any one of the first aspect to the sixth aspect and the possible designs. The chip system may include a chip, or may include a chip and another discrete device.

According to a fourteenth aspect, a communication system is provided. The system includes the apparatus (for example, a terminal device) according to the first aspect and the apparatus (for example, a network device) according to the second aspect.

According to a fifteenth aspect, a communication system is provided. The system includes the apparatus (for example, a terminal device) according to the third aspect and the apparatus (for example, a network device) according to the fourth aspect.

According to a sixteenth aspect, a communication system is provided. The system includes the apparatus (for example, a terminal device) according to the fifth aspect and the apparatus (for example, a network device) according to the sixth aspect.

For technical effects that can be achieved by the technical solutions in any one of the seventh aspect to the sixteenth aspect, refer to the descriptions of the technical effects that can be achieved by the technical solution in the first aspect. Details are not described herein again.

BRIEF DESCRIPTION OF DRAWINGS

FIG. 1 is a diagram of an example of DRX according to an embodiment of this application;

FIG. 2 is a diagram of an architecture of an NTN system according to an embodiment of this application;

FIG. 3 is a diagram of an architecture of an NTN system according to an embodiment of this application;

FIG. 4 is a schematic flowchart of a communication method according to an embodiment of this application;

FIG. 5 is a diagram of an association relationship between DRX and an SMTC window according to an embodiment of this application;

FIG. 6 is a diagram of an association relationship between DRX and an SMTC window according to an embodiment of this application;

FIG. 7 is a diagram of an association relationship between DRX and an SMTC window according to an embodiment of this application;

FIG. 8 is a schematic flowchart of a communication method according to an embodiment of this application;

FIG. 9 is a diagram of a MAC CE according to an embodiment of this application;

FIG. 10 is a diagram of a MAC CE according to an embodiment of this application;

FIG. 11 is a diagram of a MAC CE according to an embodiment of this application;

FIG. 12 is a diagram of a MAC CE according to an embodiment of this application;

FIG. 13 is a schematic flowchart of a communication method according to an embodiment of this application;

FIG. 14 is a diagram of a MAC CE according to an embodiment of this application;

FIG. 15 is a diagram of a MAC CE according to an embodiment of this application;

FIG. 16 is a diagram of a structure of a communication apparatus according to an embodiment of this application; and

FIG. 17 is a diagram of a structure of a communication apparatus according to an embodiment of this application.

## DESCRIPTION OF EMBODIMENTS

To make the objectives, technical solutions, and advantages of embodiments of this application clearer, the following further describe embodiments of this application in detail with reference to the accompanying drawings.

The following describes some terms in embodiments of this application, to facilitate understanding of a person skilled in the art.

Discontinuous reception (discontinuous reception, DRX)

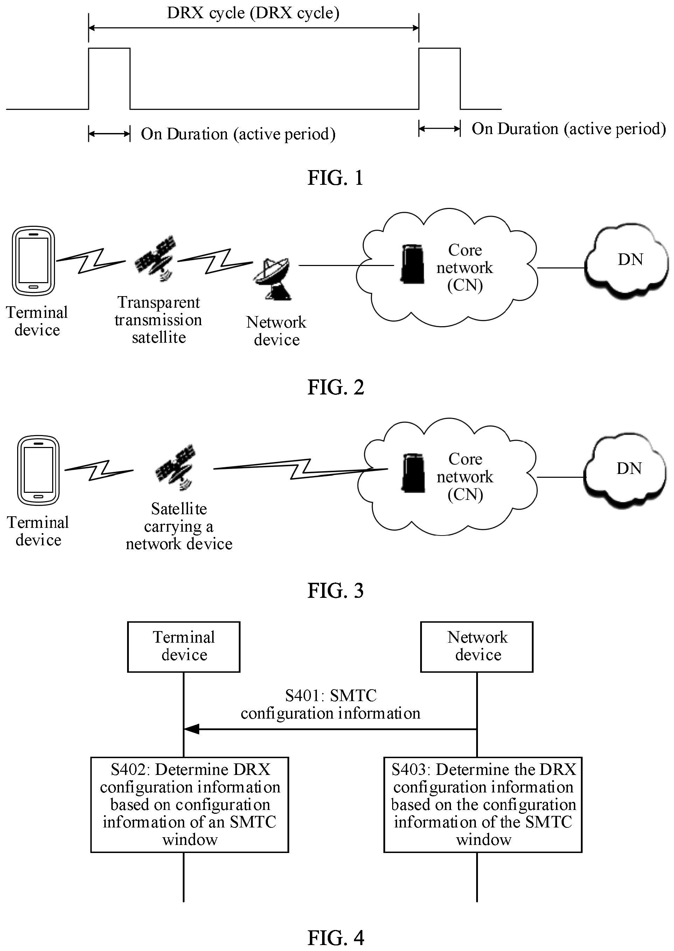

To reduce power consumption, when there is no data transmission, a terminal device may stop receiving a physical downlink control channel (physical downlink control channel, PDCCH) (in this case, the terminal device stops PDCCH blind detection), so as to extend battery life. With discontinuous reception (discontinuous reception, DRX) technology, power saving (power saving) can be implemented. A basic mechanism of DRX is to configure a DRX cycle (DRX cycle) for the terminal device. As shown in FIG. 1, in an active (On Duration) period, the terminal device normally monitors the PDCCH, and in a dormant period (opportunity for DRX), the terminal device may enter a dormant state and does not receive the PDCCH, to reduce power consumption.

A parameter drx-OnDurationTimer is used to configure On Duration within one DRX cycle.

A parameter drx-SlotOffset is used to configure a delay for starting a DRX OnDuration timer. Specifically, within a DRC cycle, the DRX OnDuration timer starts after a slot offset indicated by drx-SlotOffset following the beginning of an On Duration subframe, where drx-SlotOffset is an offset in the subframe and is less than 1 ms.

For a parameter drx-InactivityTimer, during the On Duration, when the terminal device performs uplink and downlink data transmission scheduling, a network device starts or restarts a drx-InactivityTimer, and the terminal device remains active until the timer expires. If the drx-InactivityTimer is running, even if the DRX OnDuration timer has expired, the terminal device still needs to monitor the downlink PDCCH until the drx-InactivityTimer expires.

To meet requirements of the terminal device for power consumption and a data delay, two DRX cycles are introduced: a short DRX cycle and a long DRX cycle. For the long DRX cycle, a parameter drx-LongCycle represents a period of the long DRX cycle, and a parameter drx-StartOffset represents an offset of the long DRX cycle. The two parameters jointly determine a start subframe of the long DRX cycle. For the short DRX cycle, a parameter drx-ShortCycle represents a period of the short DRX cycle, and a parameter drx-ShortCycleTimer is used to configure a quantity of short DRX cycles.

The terminal device may be configured with the long DRX cycle by default. If the terminal device is configured with the short DRX cycle and the drx-InactivityTimer fires, the terminal device enters the short DRX cycle and starts the drx-ShortCycleTimer after the drx-InactivityTimer expires. If no data transmission is performed before the drx-ShortCycle-Timer expires, the terminal device switches to the long DRX cycle. For example, if the drx-ShortCycleTimer parameter is set to 16, the terminal device repeats the short DRX cycle 16 times. If the terminal device does not receive uplink or downlink data transmission scheduling within the 16 short DRX cycles, the terminal device switches to the long DRX cycle for power saving. In addition, a network side may implement switching between a long cycle and a short cycle by using signaling such as a DRX command (DRX command) and a media access control channel element (media access control channel element, MAC CE).

2. Measurement timing configuration based on a synchronization signal/physical broadcast channel block (synchronization signal/physical broadcast channel block, SSB) (SSB-based measurement timing configuration, SMTC)

The SMTC is a window that is configured by a network device for a terminal device and that is used for SSB measurement. The terminal device only needs to perform SSB measurement in the SMTC window, and does not need to perform SSB measurement outside the window.

3. NTN communication

The NTN communication may also be referred to as satellite communication. A satellite communication architecture is classified into the following two types: A first type is a transparent (transparent) architecture as shown in FIG. 2. In this case, a satellite only serves as a relay (relay) or an amplifier, and may perform radio frequency filtering and amplification to regenerate a signal. A second type is a regenerative (regenerative) architecture as shown in FIG. 3. In this case, a satellite may serve as a next generation NodeB (generated NodeB, gNB), a distributed unit (distributed unit, DU), or a relay. The relay herein is different from the relay of the first type; the relay here is no longer a simple relay but has a signal processing function, similar to an integrated access and backhaul (integrated access and backhaul, IAB) node or another relay node. When the satellite serves as the gNB, the DU, the IAB, or the another relay node, the satellite functions similarly to a common gNB, DU, or IAB, or another common relay node.

The NTN communication system provides seamless coverage for a terminal device by deploying an access network device or some functions of the access network device on a non-terrestrial device (for example, a high altitude platform or a satellite). Because the non-terrestrial device is less susceptible to natural disasters, reliability of the communication system can be improved. For ease of description and understanding of the solutions in embodiments of this application, an NTN communication system in which an access network device is deployed on a satellite is used as an example for subsequent descriptions in this application. In addition, for ease of description, in this application, "an access network device on a satellite" is replaced with "a satellite" for description, and "NTN communication" is replaced with "satellite communication" for description. In other words, communication between a terminal device and a satellite subsequently described in this application actually refers to communication between the terminal device and the access network device on the satellite. This is uniformly described herein, and details are not described below again.

In embodiments of this application, "at least one" means one or more, and "a plurality of" means two or more. "And/Or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be single or may be plural.

In addition, unless otherwise specified, ordinal numbers such as "first" and "second" in embodiments of this application are used to distinguish between a plurality of objects, but are not intended to limit sizes, content, an order, a time sequence, priorities, importance, or the like of the plurality of objects.

It should be noted that in this application, the term "example", "for example" or the like is used to represent giving an example, an illustration, or a description. Any embodiment or design scheme described as an "example" or "for example" in this application should not be construed as being more preferred or more advantageous than another embodiment or design scheme. Exactly, use of the term "example", "for example" or the like is intended to present a related concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another step or unit that is inherent to the process, the method, the product, or the device.

The foregoing describes some terms in embodiments of this application. The following describes an architecture of a network system to which the method provided in this application is applied.

Network elements in embodiments of this application include a network device and a terminal device.

The network device is an entity configured to transmit or receive a signal on a network side, for example, a next generation NodeB (generation NodeB, gNodeB). The network device may be a device for communication with a mobile device. The network device may be an AP in a wireless local area network (wireless local area network, WLAN), an evolved NodeB (evolved NodeB, eNB or eNodeB) in long term evolution (long term evolution, LTE), a relay station, an access point, an integrated access and backhaul (integrated access and backhaul, IAB) device, a vehicle-mounted device, a wearable device, a network device in a future 5G network, a network device in a future evolved public land mobile communication network (public land mobile network, PLMN), a gNodeB (gNB) in an NR system, or the like. In addition, in embodiments of this application, the network device provides a service for a cell, and the terminal device communicates with the network device by using a transmission resource (for example, a frequency domain resource or a spectrum resource) used by the cell. In addition, in another possible case, the network device may be another apparatus that provides a wireless communication function for the terminal device. A specific technology and a specific device form that are used by the network device are not limited in embodiments of this application. For ease of description, in embodiments of this application, the apparatus that provides the wireless communication function for the terminal device is referred to as the network device.

The terminal device may be a wireless terminal device that can receive scheduling information and indication information of the network device. The wireless terminal device may be a device that provides voice and/or data connectivity for users, a handheld device possessing a wireless connection function, or another processing device connected to a wireless modem. The wireless terminal device may communicate with one or more core networks or the Internet via a wireless access network (for example, a radio access network, RAN). The wireless terminal device may be a mobile terminal device like a mobile handset (or referred to as a "cellular" phone or a mobile phone (mobile phone)), a computer, and a data card. For example, the wireless terminal device may be a portable, pocket-sized, handheld, computer built-in, or vehicle-mounted mobile apparatus that exchanges a language and/or data with the radio access network, for example, a device like a personal communications service (personal communications service, PCS) phone, a cordless phone, a session initiation protocol (SIP) phone, a wireless local loop (wireless local loop, WLL) station, a personal digital assistant (personal digital assistant, PDA), a tablet (Pad), or a computer with a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station device (subscriber station, SS), customer-premises equipment (customer-premises equipment, CPE), a terminal (terminal), user equipment (user equipment, UE), a mobile terminal (mobile terminal, MT), or the like. Alternatively, the wireless terminal device may be a wearable device and a next-generation communication system, for example, a terminal device in a 5G network, a terminal device in a future evolved PLMN network, or a terminal device in a new radio (new radio, NR) communication system.

In addition, embodiments of this application are applicable to another future-oriented communication technology. The network architectures and service scenarios that are described in this application are intended to describe the technical solutions in this application more clearly, and do not constitute a limitation on the technical solutions provided in this application. A person of ordinary skill in the art may learn that, with evolution of network architectures and emergence of new service scenarios, the technical solutions provided in this application are also applicable to a similar technical problem.

It should be noted that types and modes of the foregoing communication systems are not limited in embodiments of this application. For example, the communication system may be a 5th generation (5th Generation, 5G) communication system, a long term evolution (Long Term Evolution, LTE) communication system, or the like.

Embodiments of this application may be applied to a 4th generation mobile communication system (4th generation, 4G) system, a 5G system, an NTN system (for example, an NTN system with the transparent architecture shown in FIG. 2, an NTN system with the regenerative architecture shown in FIG. 3, or an NTN system with another architecture), vehicle-to-everything (vehicle-to-everything, V2X), long term evolution-vehicle (LTE-vehicle, LTE-V), and vehicle-to-vehicle (vehicle-to-vehicle, V2V), an internet of vehicles, machine-type communication (Machine-Type Communication, MTC), an internet of things (internet of things, IoT), long term evolution-machine to machine (LTE-machine to machine, LTE-M), machine-to-machine (machine-to-machine, M2M), an internet of things, or a future mobile communication system.

The network architectures and service scenarios that are described in embodiments of this application are intended to describe the technical solutions in embodiments of this application more clearly, and do not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

The following describes technical features in embodiments of this application.

As described in the foregoing terms, a terminal device in the active state during On Duration may monitor a downlink signal, and the terminal device wakes up in the SMTC window to monitor the SSB. In a satellite scenario, an SSB index (SSB index) for the terminal device changes as a satellite moves. This can result in a mismatch between the On Duration of the terminal device and an arrival time of the SSB, causing the terminal device to wake up at multiple times for detection.

Based on this, embodiments of this application provide a communication method and apparatus, to address an issue of poor energy saving performance when a DRX-based terminal device performs SSB detection. The method and the apparatus are based on a same idea. Because problem-resolving principles of the method and the apparatus are similar, implementations of the apparatus and the method may be mutually referenced. Details are not repeated.

The following describes in detail the communication method provided in this application with reference to the accompanying drawings.

FIG. 4 is a schematic flowchart of a communication method according to this application. The method includes the following steps.

S401: A network device sends SMTC configuration information, where the SMTC configuration information includes periodicity of an SMTC window and a start position of the SMTC window. Correspondingly, a terminal device receives the SMTC configuration information.

S402: The terminal device determines DRX configuration information based on configuration information of the SMTC window. The DRX configuration information includes a cycle period of DRX and a start position of the DRX.

Specifically, the terminal device may determine the cycle period of the DRX based on the periodicity of the SMTC window, and determine the start position of the DRX based on the start position of the SMTC window.

For example, the cycle period of the DRX may be N times the periodicity of the SMTC window, where N is an integer. N is a default value or is configured by the network device. For example, the terminal device and the network device may have a default value for N. For another example, the network device may indicate a value of N to the terminal device. For another example, if the network device does not indicate a value of N to the terminal device, N is the default value; if the network device indicates a value of N to the terminal device, N is the value indicated by the network device.

For example, the start position of the DRX may be determined based on the start position of the SMTC window and the cycle period of the DRX.

In Example 1, the start position of the DRX satisfies the following formula:

$$\text{drx-StartOffset} = \text{periodicityAndOffset mod drx-Cycle},$$

where
drx-StartOffset is the start position of the DRX, periodicityAndOffset is the start position of the SMTC window, and drx-Cycle is the cycle period of the DRX. When a long DRX cycle is configured and activated, drx-Cycle may be drx-LongCycle in the foregoing term descriptions. When a short DRX cycle is configured and activated, drx-Cycle may be drx-ShortCycle in the foregoing term descriptions.

mod is a modulo operation.

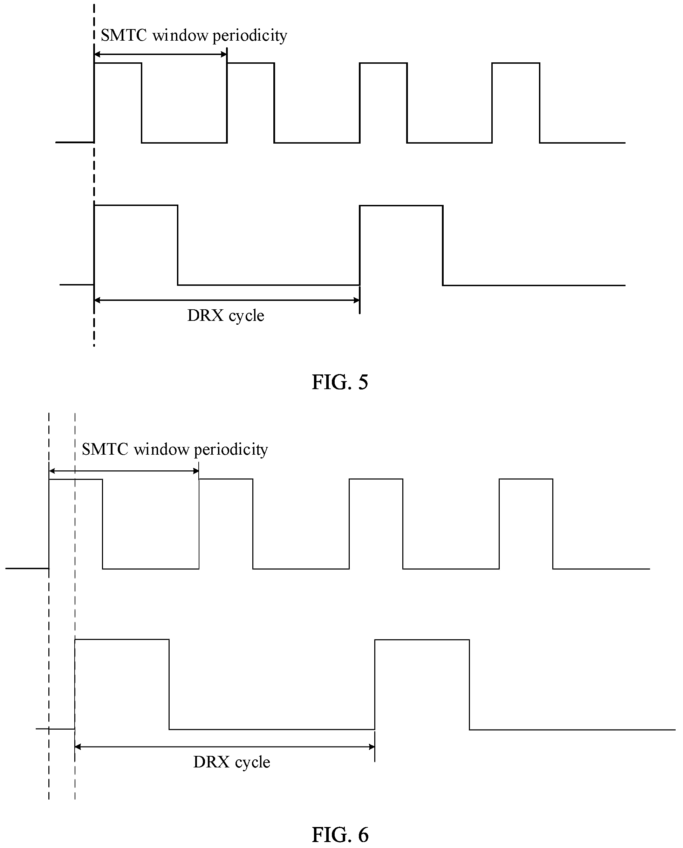

In an example, assuming that N is equal to 2, that is, the cycle period of the DRX is twice the periodicity of the SMTC window, a relationship between the DRX and the SMTC window may be shown in FIG. 5.

In Example 2, the start position of the DRX satisfies the following formula:

$$\text{drx-StartOffset} = \text{periodicityAndOffset mod drx-Cycle} + \text{offset1},$$

where
offset1 is an offset greater than 0.

Optionally, offset1 is indicated by the network device. For example, an existing field or a newly added field may indicate offset1.

Alternatively, offset1 is determined based on the periodicity of the SMTC window. For example, offset1 is 1/2 of the periodicity of the SMTC window. This is not specifically limited herein.

Alternatively, offset1 is determined based on the cycle period of the DRX. For example, offset1 is 1/2 of the cycle period of the DRX. This is not specifically limited herein.

Alternatively, offset1 is a preset value.

In an example, assuming that N is equal to 2, that is, the cycle period of the DRX is twice the periodicity of the SMTC window, and offset1 is 1/2 of the periodicity of the SMTC window, a relationship between the DRX and the SMTC window may be shown in FIG. 6.

In Example 3, the start position of the DRX satisfies the following formula:

$$\text{drx-StartOffset} = \text{periodicityAndOffset mod drx-Cycle} - \text{offset2},$$

where
offset2 is an offset greater than 0.

Optionally, offset2 is indicated by the network device. For example, an existing field or a newly added field may indicate offset2.

Alternatively, offset2 is determined based on the periodicity of the SMTC window. For example, offset2 is 1/2 of the periodicity of the SMTC window. This is not specifically limited herein.

Alternatively, offset2 is determined based on the cycle period of the DRX. For example, offset2 is 1/2 of the cycle period of the DRX. This is not specifically limited herein.

Alternatively, offset2 is a preset value.

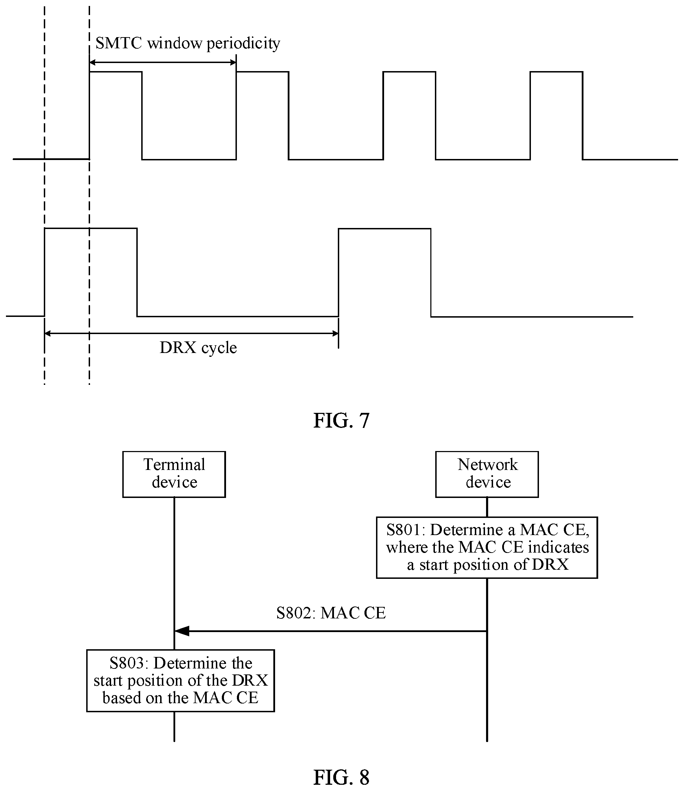

In an example, assuming that N is equal to 2, that is, the cycle period of the DRX is twice the periodicity of the SMTC window, and offset2 is 1/2 of the periodicity of the SMTC window, a relationship between the DRX and the SMTC window may be shown in FIG. 7.

In a possible implementation, the SMTC configuration information further includes duration of the SMTC window. The terminal device may further determine On Duration of the DRX based on the duration of the SMTC window.

For example, a relationship between the On Duration and the duration of the SMTC window is one of the following:

the On Duration is the same as the duration of the SMTC window; or

the On Duration is M times the duration of the SMTC window, where M is an integer; or

the On Duration has a forward offset of X1 compared with the duration of the SMTC window, where X1 is a positive integer; or

the On Duration has a backward offset of X2 compared with the duration of the SMTC window, where X2 is a positive integer.

Optionally, the relationship between the duration of the SMTC window and the On Duration in the DRX may be predefined according to a protocol, or may be indicated by the network device.

S403: The network device determines the DRX configuration information based on the configuration information of the SMTC window. The DRX configuration information includes the cycle period of the DRX and the start position of the DRX.

Specifically, the network device may determine the cycle period of the DRX based on the periodicity of the SMTC window, and determine the start position of the DRX based on the start position of the SMTC window. For details, refer to the related descriptions in S402. Details are not described herein again.

Optionally, the network device may determine the On Duration in the DRX based on the duration of the SMTC window. For details, refer to the related descriptions in S402. Details are not described herein again.

It should be noted that a sequence of performing S402 and S403 is not limited in this application. S402 may be performed before S403, or S403 may be performed before S402, or S402 and S403 may be simultaneously performed.

Optionally, the network device may indicate an association relationship between the SMTC window and the DRX based on downlink control information (downlink control information, DCI), a media access control channel element (media access control channel element, MAC CE), or radio resource control (radio resource control, RRC) signaling. For example, an association relationship between the periodicity of the SMTC window and the cycle period of the DRX may be indicated. For another example, an association relationship between the start position of the SMTC window and the start position of the DRX may be indicated. Alternatively, an association relationship between the duration of the SMTC window and the On Duration in the DRX may be indicated.

Alternatively, the network device may indicate an association relationship between the SMTC window and the DRX based on a cell broadcast message. In this manner, terminal devices in a current cell can use the same association relationship.

Alternatively, the network device first indicates the association relationship between the SMTC window and the DRX based on the cell broadcast message. After the terminal device accesses the network device, the network device may update the association relationship between the SMTC window of the terminal device and the DRX by using the DCI, the MAC CE, or the RRC signaling.

It should be noted that FIG. 4 provides only an example where the DRX configuration information is determined based on the SMTC configuration information. In a specific implementation, the SMTC configuration information may alternatively be determined based on the DRX configuration information. For example, the network device sends the DRX configuration information to the terminal device, and the terminal device and the network device determine the SMTC configuration information based on the DRX configuration information. For an association relationship between DRX and an SMTC window, refer to the descriptions in FIG. 4. Details are not described herein again.

In this embodiment of this application, the SMTC window and the DRX are indicated in an association, so that the SMTC window can match the On Duration in the DRX, and when an SSB arrives at the terminal device, the terminal device is precisely in the On Duration. In this way, the terminal device only needs to wake up once to complete PDCCH detection and SSB detection, thereby reducing energy consumption on the terminal device. In addition, according to the foregoing embodiment, the network device may configure the SMTC window and the DRX by using a uniform parameter, eliminating overhead caused by a plurality of times of RRC reconfiguration.

The foregoing describes the association relationship between the SMTC window and the DRX. The following describes a method for configuring the SMTC window and the DRX. It should be understood that the configuration manner for the SMTC window described below may be implemented separately, or may be combined with the method in FIG. 4 as a solution for implementation. For example, an SMTC window may be configured by using the configuration manner for the SMTC window described below, and DRX is determined based on the association relationship between the DRX and the SMTC window in the method in FIG. 4. The configuration manner for the DRX described below may be implemented separately, or may be combined with the method described in FIG. 4 as a solution for implementation. For example, DRX may be configured by using the configuration manner for the DRX described below, and an SMTC window is determined based on the association relationship between the DRX and the SMTC window in the method described in FIG. 4.

FIG. 8 is a schematic flowchart of a communication method according to this application. The method includes the following steps.

S801: A network device determines a MAC CE, where the MAC CE indicates a start position of DRX.

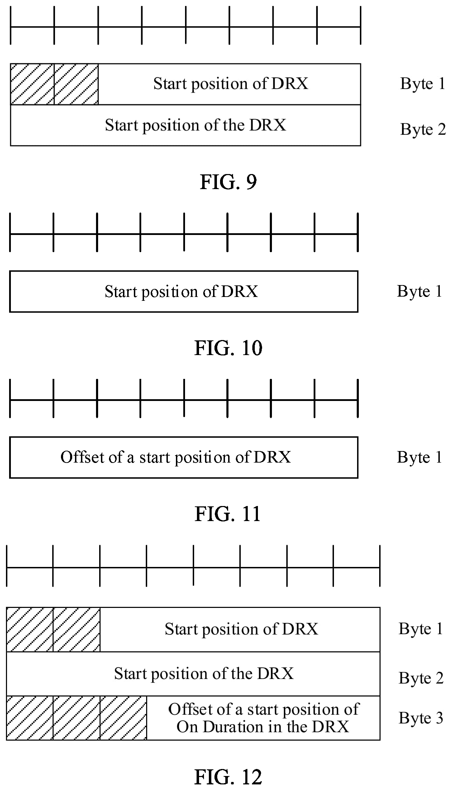

In an example, n1 padding bytes in the MAC CE indicate the start position of the DRX, for example, indicating drx-LongCycleStartOffset, where drx-LongCycleStartOffset represents a start position of a long DRX cycle, where n1 is an integer greater than 0. For example, as shown in FIG. 9, two padding bytes in the MAC CE indicate a start position (0 ms to 10239 ms) of the DRX. For another example, as shown in FIG. 10, one padding byte in the MAC CE indicates a start position (0 ms to 256 ms) of partial DRX.

In another example, n2 padding bytes in the MAC CE indicate an offset of the start position of the DRX relative to a start position of first DRX, where n2 is an integer greater than 0. For example, as shown in FIG. 11, one padding byte in the MAC CE indicates an offset (-127 ms to 128 ms) from a current drx-LongCycleStartOffset.

Optionally, n3 padding bytes in the MAC CE may further indicate an offset (that is, drx-SlotOffset) of a start position of On Duration in the DRX relative to the start position of the DRX, where n3 is an integer greater than 0. Taking the example shown in FIG. 9 for illustration, first two bytes in a padding field in the MAC CE represent drx-LongCycleStartOffset (0 ms to 10239 ms), and a last byte represents drx-SlotOffset (0 to 31), as shown in FIG. 12. After receiving the MAC CE, a terminal device may calculate a start moment of the On Duration based on drx-LongCycleStartOffset and drx-SlotOffset that are indicated by the MAC CE.

Optionally, the MAC CE may further indicate a function of the MAC CE by using n4 bytes, that is, the MAC CE uses the n4 bytes to indicate that the MAC carries the start position of the DRX. For example, the MAC CE may indicate the function of the MAC CE by using a reserved byte in a logical channel identifier (logical channel identifier, LCID) field or an extended LCID (extended LCID, eLCID) field.

S802: The network device sends the MAC CE. Correspondingly, the terminal device receives the MAC CE.

S803: The terminal device determines the start position of the DRX based on the MAC CE.

In a possible implementation, when the network device configures the DRX, an SMTC window and On Duration may overlap.

In this embodiment of this application, the MAC CE indicates the start position of the DRX or a change in the start position of the DRX, so that DRX configuration overhead can be reduced.

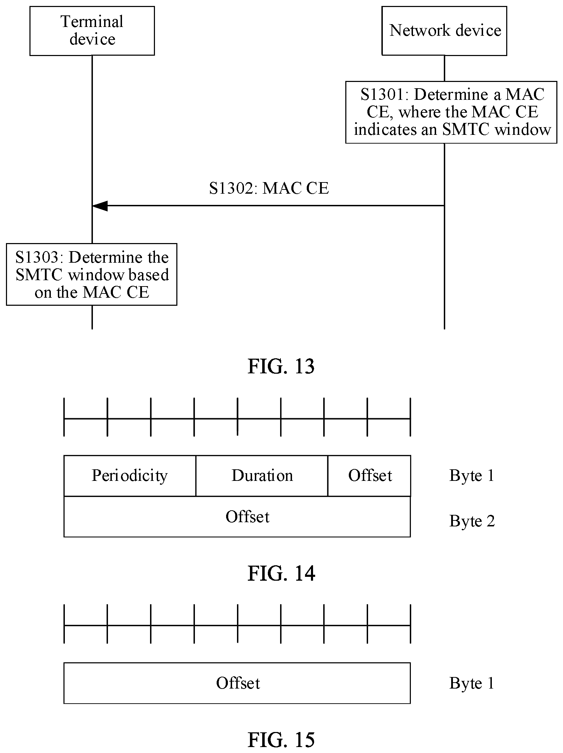

FIG. 13 is a schematic flowchart of a communication method according to this application. The method includes the following steps.

S1301: A network device determines a MAC CE, where the MAC CE indicates an SMTC window.

In an example, the MAC CE indicates at least one piece of the following information: periodicity of the SMTC window, a start position of the SMTC window, or duration of the SMTC window.

Optionally, n padding bytes in the MAC CE indicate the SMTC window, where n is an integer greater than 0.

For example, as shown in FIG. 14, two padding bytes in the MAC CE indicate the periodicity (represented as Periodicity in FIG. 14) of the SMTC window, an offset of the start position (represented as Offset in FIG. 14) of the SMTC window, and the duration (represented as Duration in FIG. 14) of the SMTC window. The periodicity (3 bits) of the SMTC window may indicate sf5, sf10, sf20, sf40, sf80, sf160, sf320, sf640, or the like. The duration (3 bits) of the SMTC window may indicate sf1, sf2, sf2, sf3, sf4, sf4, sf5, sf6, sf7, sf8. The start position (10 bits) of the SMTC window may indicate an offset of 0 to 1023 sf, where sf represents a subframe.

For another example, as shown in FIG. 15, one padding byte in the MAC CE indicates a start position of the SMTC window. A start position (8 bits) of the SMTC window may indicate a start offset of 0 to 255 sf.

In another example, the MAC CE is used to activate one set of SMTC configuration among a plurality of sets of SMTC configurations, and any one set of the SMTC configuration among the plurality of sets of SMTC configurations includes at least one of the following parameters: periodicity of the SMTC window, a start position of the SMTC window, or duration of the SMTC window.

S1302: The network device sends the MAC CE. Correspondingly, a terminal device receives the MAC CE.

S1303: The terminal device determines the SMTC window based on the MAC CE.

Optionally, the MAC CE may further indicate a function of the MAC CE by using n4 bytes, that is, the MAC CE uses the n4 bytes to indicate that the MAC CE configures the SMTC window. For example, the MAC CE may indicate the function of the MAC CE by using a reserved byte in a logical channel identifier (logical channel identifier, LCID) field or an extended LCID (extended LCID, eLCID) field.

In this embodiment of this application, the MAC CE indicates a change in the SMTC window, so that overhead on the terminal device for frequent SMTC window reconfigurations induced by satellite movement can be reduced.

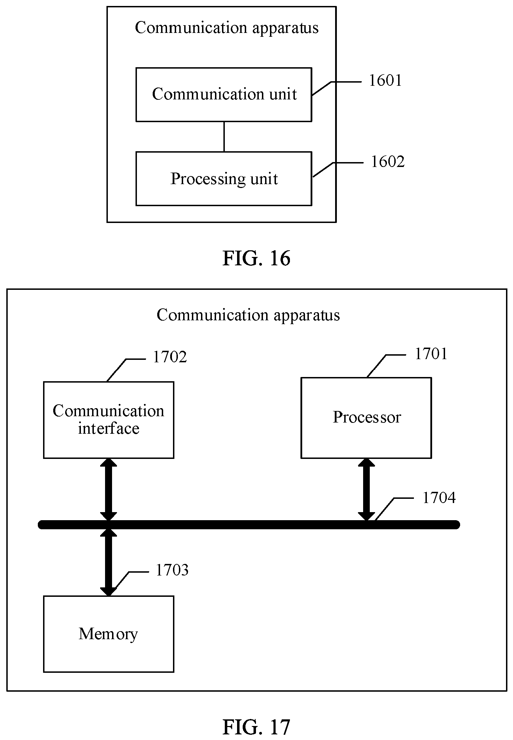

Based on a same idea as the method embodiments, an embodiment of this application provides a communication apparatus. A structure of the communication apparatus may be shown in FIG. 16, including a communication unit 1601 and a processing unit 1602.

In an implementation, the communication apparatus may be specifically configured to implement the method performed by the terminal device in the embodiments in FIG. 4. The apparatus may be the terminal device, or may be a chip or a chip set in the terminal device, or part of the chip that is in the terminal device and that is configured to perform a related method function. The communication unit 1601 is configured to receive SMTC configuration information, where the SMTC configuration information includes periodicity of an SMTC window and a start position of the SMTC window. The processing unit 1602 is configured to determine a cycle period of DRX based on the periodicity of the SMTC window, and determine a start position of DRX based on the start position of the SMTC window.

For example, the cycle period of the DRX is N times the periodicity of the SMTC window, where N is an integer.

For example, N is a default value or is configured by a network device.

For example, a relationship between the start position of the SMTC window and the start position of the DRX satisfies the following formula:

$$\text{drx-StartOffset} = \text{periodicityAndOffset mod drx-Cycle},$$

where
drx-StartOffset is the start position of the DRX, periodicityAndOffset is the start position of the SMTC window, drx-Cycle is the cycle period of the DRX, and mod is a modulo operation.

Alternatively, a relationship between the start position of the SMTC window and the start position of the DRX satisfies the following formula:

$$\text{drx-StartOffset} = \text{periodicityAndOffset mod drx-Cycle} + \text{offset1},$$

where
offset1 is an offset greater than 0 and offset1 is indicated by the network device, or offset1 is determined based on the periodicity of the SMTC window or the cycle period of the DRX, or offset1 is a preset value.

Alternatively, a relationship between the start position of the SMTC window and the start position of the DRX satisfies the following formula:

$$\text{drx-StartOffset} = \text{periodicityAndOffset mod drx-Cycle} - \text{offset2},$$

where
offset2 is an offset greater than 0 and offset2 is indicated by the network device, or offset2 is determined based on the periodicity of the SMTC window or the cycle period of the DRX, or offset2 is a preset value.

Optionally, the SMTC configuration information further includes duration of the SMTC window, and the processing unit 1602 is further configured to:
determine On Duration in the DRX based on the duration of the SMTC window.

For example, a relationship between the On Duration and the duration of the SMTC window is one of the following:

the On Duration is the same as the duration of the SMTC window; or
the On Duration is M times the duration of the SMTC window, where M is an integer; or
the On Duration has a forward offset of X1 compared with the duration of the SMTC window, where X1 is a positive integer; or
the On Duration has a backward offset of X2 compared with the duration of the SMTC window, where X2 is a positive integer.

Optionally, the communication unit 1601 is further configured to:
receive indication information, where the indication information indicates the relationship between the On Duration and the duration of the SMTC window.

In another implementation, the communication apparatus shown in FIG. 16 may be specifically configured to implement the method performed by the network device in the embodiments in FIG. 4. The apparatus may be the network device, or may be a chip or a chip set in the network device, or part of the chip that is in the network device and that is configured to perform a related method function. The communication unit 1601 is configured to send SMTC configuration information, where the SMTC configuration information includes periodicity of an SMTC window and a start position of the SMTC window. The processing unit 1602 is configured to determine a cycle period of DRX based on the periodicity of the SMTC window, and determine a start position of the DRX based on the start position of the SMTC window.

For example, the cycle period of the DRX is N times the periodicity of the SMTC window, where N is an integer.

For example, N is a default value or is configured by the network device.

For example, a relationship between the start position of the SMTC window and the start position of the DRX satisfies the following formula:

$$drx\text{-}StartOffset = periodicityAndOffset \bmod drx\text{-}Cycle,$$

where
drx-StartOffset is the start position of the DRX, periodicityAndOffset is the start position of the SMTC window, drx-Cycle is the cycle period of the DRX, and mod is a modulo operation.

Alternatively, a relationship between the start position of the SMTC window and the start position of the DRX satisfies the following formula:

$$drx\text{-}StartOffset = periodicityAndOffset \bmod drx\text{-}Cycle + offset1,$$

where
offset1 is an offset greater than 0 and offset1 is indicated by the network device, or offset1 is determined based on the periodicity of the SMTC window or the cycle period of the DRX, or offset1 is a preset value.

Alternatively, a relationship between the start position of the SMTC window and the start position of the DRX satisfies the following formula:

$$drx\text{-}StartOffset = periodicityAndOffset \bmod drx\text{-}Cycle - offset2,$$

where
offset2 is an offset greater than 0 and offset2 is indicated by the network device, or offset2 is determined based on the cycle period of the DRX or the cycle period of the DRX, or offset2 is a preset value.

Optionally, the SMTC configuration information further includes duration of the SMTC window, and the processing unit 1602 is further configured to determine On Duration in the DRX based on the duration of the SMTC window.

For example, a relationship between the On Duration and the duration of the SMTC window is one of the following:

the On Duration is the same as the duration of the SMTC window; or
the On Duration is M times the duration of the SMTC window, where M is an integer; or
the On Duration has a forward offset of X1 compared with the duration of the SMTC window, where X1 is a positive integer; or
the On Duration has a backward offset of X2 compared with the duration of the SMTC window, where X2 is a positive integer.

Optionally, the communication unit 1601 is further configured to:
send indication information, where the indication information indicates the relationship between the On Duration and the duration of the SMTC window.

In an implementation, the communication apparatus may be specifically configured to implement the method performed by the terminal device in the embodiments in FIG. 8. The apparatus may be the terminal device, or may be a chip or a chip set in the terminal device, or part of the chip that is in the terminal device and that is configured to perform a related method function. The communication unit 1601 is configured to receive a MAC CE, where the MAC CE indicates a start position of DRX. The processing unit 1602 is configured to determine the start position of the DRX based on the MAC CE.

For example, n1 padding bytes in the MAC CE indicate the start position of the DRX, where n1 is an integer greater than 0.

For example, n2 padding bytes in the MAC CE indicate an offset of the start position of the DRX relative to a start position of first DRX, where n2 is an integer greater than 0.

For example, n3 padding bytes in the MAC CE indicate an offset of a start position of On Duration in the DRX relative to the start position of the DRX, where n3 is an integer greater than 0.

In an implementation, the communication apparatus shown in FIG. 16 may be specifically configured to implement the method performed by the network device in the embodiments in FIG. 8. The apparatus may be the network device, or may be a chip or a chip set in the network device, or part of the chip that is in the network device and that is configured to perform a related method function. The processing unit 1602 is configured to determine a MAC CE, where the MAC CE indicates a start position of DRX. The communication unit 1601 is configured to send the MAC CE.

For example, n1 padding bytes in the MAC CE indicate the start position of the DRX, where n1 is an integer greater than 0.

For example, n2 padding bytes in the MAC CE indicate an offset of the start position of the DRX relative to a start position of first DRX, where n2 is an integer greater than 0.

For example, n3 padding bytes in the MAC CE indicate an offset of a start position of On Duration in the DRX relative to the start position of the DRX, where n3 is an integer greater than 0.

In an implementation, the communication apparatus may be specifically configured to implement the method performed by the terminal device in the embodiments in FIG. 13. The apparatus may be the terminal device, or may be a chip or a chip set in the terminal device, or part of the chip that is in the terminal device and that is configured to perform a related method function. The communication unit 1601 is configured to receive a MAC CE, where the MAC CE indicates an SMTC window. The processing unit 1602 determines the SMTC window based on the MAC CE.

For example, that the MAC CE indicates the SMTC window includes: The MAC CE indicates at least one piece of the following information: periodicity of the SMTC window, a start position of the SMTC window, or duration of the SMTC window.

For example, n padding bytes in the MAC CE indicate the SMTC window, where n is an integer greater than 0.

For example, that the MAC CE indicates the SMTC window includes: The MAC CE is used to activate one set of SMTC configuration among a plurality of sets of SMTC configurations, and any one set of the SMTC configuration among the plurality of sets of SMTC configurations includes at least one of the following parameters: periodicity of the SMTC window, a start position of the SMTC window, or duration of the SMTC window.

In an implementation, the communication apparatus shown in FIG. 16 may be specifically configured to implement the method performed by the network device in the embodiments in FIG. 13. The apparatus may be the network device, or may be a chip or a chip set in the network device, or part of the chip that is in the network device and that is configured to perform a related method function. The processing unit 1602 is configured to determine a MAC CE, where the MAC CE indicates an SMTC window. The communication unit 1601 is configured to send the MAC CE.

For example, that the MAC CE indicates the SMTC window includes: The MAC CE indicates at least one piece of the following information: periodicity of the SMTC window, a start position of the SMTC window, or duration of the SMTC window.

For example, n padding bytes in the MAC CE indicate the SMTC window, where n is an integer greater than 0.

For example, that the MAC CE indicates the SMTC window includes: The MAC CE is used to activate one set of SMTC configuration among a plurality of sets of SMTC configurations, and any one set of the SMTC configuration among the plurality of sets of SMTC configurations includes at least one of the following parameters: periodicity of the SMTC window, a start position of the SMTC window, or duration of the SMTC window.

Division into the modules in embodiments of this application is an example, is merely logical function division, and may be other division in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, a communication apparatus may be shown in FIG. 17. The apparatus may be a communication device or a chip in the communication device. The communication device may be the terminal device in the foregoing embodiments, or may be the network device in the foregoing embodiments. The apparatus includes a processor 1701 and a communication interface 1702, and may further include a memory 1703. The processing unit 1602 may be the processor 1701. The communication unit 1601 may be the communication interface 1702. Optionally, the processor 1701 and the memory 1703 may be integrated together.

The processor 1701 may be a CPU, a digital processing unit, or the like. The communication interface 1702 may be a transceiver, or may be an interface circuit like a transceiver circuit, or may be a transceiver chip, or the like. The apparatus further includes the memory 1703, configured to store a program executed by the processor 1701. The memory 1703 may be a nonvolatile memory, for example, a hard disk (hard disk drive, HDD) or a solid-state drive (solid-state drive, SSD), or may be a volatile memory (volatile memory), for example, a random access memory (random access memory, RAM). The memory 1703 is any other medium that can be used to carry or store expected program code in a form of instructions or a data structure and that can be accessed by a computer, but is not limited thereto.

The processor 1701 is configured to execute the program code stored in the memory 1703, and is specifically configured to perform the actions of the processing unit 1602. Details are not described herein again in this application. The communication interface 1702 is specifically configured to perform the actions of the communication unit 1601. Details are not described herein in this application.

A specific connection medium between the communication interface 1702, the processor 1701, and the memory 1703 is not limited in this embodiment of this application. In this embodiment of this application, in FIG. 17, the memory 1703, the processor 1701, and the communication interface 1702 are connected through a bus 1704. The bus is represented by a thick line in FIG. 17. A manner of connection between other components is merely an example for description and imposes no limitation. Buses may be classified into an address bus, a data bus, a control bus, and the like. For ease of representation, only one thick line is used to represent the bus in FIG. 17, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement a function of the terminal device in the embodiments in FIG. 4 and a communication apparatus configured to implement a function of the network device in the embodiments in FIG. 4.

An embodiment of this application further provides a communication system, including a communication apparatus configured to implement a function of the terminal device in the embodiments in FIG. 8 and a communication apparatus configured to implement a function of the network device in the embodiments in FIG. 8.

An embodiment of this application further provides a communication system, including a communication apparatus configured to implement a function of the terminal device in the embodiments in FIG. 13 and a communication apparatus configured to implement a function of the network device in the embodiments in FIG. 13.

A person skilled in the art should understand that embodiments of this application may be provided as a method, a system, or a computer program product. Therefore, a form of hardware-only embodiments, software-only embodiments, or embodiments with a combination of software and hardware may be used in this application. In addition, a form of a computer program product that is implemented on one or more computer-usable storage media (including but not limited to a disk memory, a CD-ROM, an optical memory, and the like) that include computer-usable program code may be used in this application.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of the processes and/or the blocks in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device to generate processing that is implemented by the computer. In this way, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and the scope of this application. If these modifications and variations of this application fall within the scope of the claims of this application and equivalent technologies thereof, this application is intended to cover these modifications and variations.

**Claims**

1. A communication method, applied to a terminal device, comprising:

receiving synchronization signal/physical broadcast channel block measurement timing configuration SMTC configuration information, wherein the SMTC configuration information comprises periodicity of an SMTC window and a start position of the SMTC window;
determining a cycle period of discontinuous reception DRX based on the periodicity of the SMTC window; and
determining a start position of the DRX based on the start position of the SMTC window.

2. The method according to claim 1, wherein the cycle period of the DRX is N times the periodicity of the SMTC window, and N is an integer.

3. The method according to claim 2, wherein N is a default value or is configured by a network device.

4. The method according to any one of claims 1 to 3, wherein

a relationship between the start position of the SMTC window and the start position of the DRX satisfies the following formula:

$$\text{drx-StartOffset} = \text{periodicityAndOffset} \bmod \text{drx-Cycle},$$

wherein
drx-StartOffset is the start position of the DRX, periodicityAndOffset is the start position of the SMTC window, drx-Cycle is the cycle period of the DRX, and mod is a modulo operation; or
a relationship between the start position of the SMTC window and the start position of the DRX satisfies the following formula:

$$\text{drx-StartOffset} = \text{periodicityAndOffset} \bmod \text{drx-Cycle} + \text{offset1},$$

wherein
offset1 is an offset greater than 0 and offset1 is indicated by the network device, or offset1 is determined based on the periodicity of the SMTC window or the cycle period of the DRX, or offset1 is a preset value; or
a relationship between the start position of the SMTC window and the start position of the DRX satisfies the following formula:

$$\text{drx-StartOffset} = \text{periodicityAndOffset} \bmod \text{drx-Cycle} - \text{offset2},$$

wherein
offset2 is an offset greater than 0 and offset2 is indicated by the network device, or offset2 is determined based on the periodicity of the SMTC window or the cycle period of the DRX, or offset2 is a preset value.

5. The method according to any one of claims 1 to 4, wherein the SMTC configuration information further comprises duration of the SMTC window, and the method further comprises:
determining on duration in the DRX based on the duration of the SMTC window.

6. The method according to claim 5, wherein a relationship between the on duration and the duration of the SMTC window is one of the following:

the on duration is the same as the duration of the SMTC window; or
the on duration is M times the duration of the SMTC window, wherein M is an integer; or
the on duration has a forward offset of X1 compared with the duration of the SMTC window, wherein X1 is a positive integer; or
the on duration has a backward offset of X2 compared with the duration of the SMTC window, wherein X2 is a positive integer.

7. The method according to claim 5 or 6, wherein the method further comprises:
receiving indication information, wherein the indication information indicates the relationship between the on duration and the duration of the SMTC window.

8. A communication method, applied to a terminal device, comprising:

transmitting synchronization signal/physical broadcast channel block measurement timing configuration SMTC configuration information, wherein the SMTC configuration information comprises periodicity of an SMTC window and a start position of the SMTC window;

determining a cycle period of discontinuous reception DRX based on the periodicity of the SMTC window; and determining a start position of the DRX based on the start position of the SMTC window.

9. The method according to claim 8, wherein the cycle period of the DRX is N times the periodicity of the SMTC window, and N is an integer.

10. The method according to claim 9, wherein N is a default value or is configured by a network device.

11. The method according to any one of claims 8 to 10, wherein

a relationship between the start position of the SMTC window and the start position of the DRX satisfies the following formula:

$$\text{drx-StartOffset} = \text{periodicityAndOffset mod drx-Cycle,}$$

wherein
drx-StartOffset is the start position of the DRX, periodicityAndOffset is the start position of the SMTC window, drx-Cycle is the cycle period of the DRX, and mod is a modulo operation; or
a relationship between the start position of the SMTC window and the start position of the DRX satisfies the following formula:

$$\text{drx-StartOffset} = \text{periodicityAndOffset mod drx-Cycle} + \text{offset1,}$$

wherein
offset1 is an offset greater than 0 and offset1 is indicated by the network device, or offset1 is determined based on the periodicity of the SMTC window or the cycle period of the DRX, or offset1 is a preset value; or
a relationship between the start position of the SMTC window and the start position of the DRX satisfies the following formula:

$$\text{drx-StartOffset} = \text{periodicityAndOffset mod drx-Cycle} - \text{offset2}$$

, wherein
offset2 is an offset greater than 0 and offset2 is indicated by the network device, or offset2 is determined based on the cycle period of the DRX or the cycle period of the DRX, or offset2 is a preset value.

12. The method according to any one of claims 8 to 11, wherein the SMTC configuration information further comprises duration of the SMTC window, and the method further comprises:
determining on duration in the DRX based on the duration of the SMTC window.

13. The method according to claim 12, wherein a relationship between the on duration and the duration of the SMTC window is one of the following:

the on duration is the same as the duration of the SMTC window; or
the on duration is M times the duration of the SMTC window, wherein M is an integer; or
the on duration has a forward offset of X1 compared with the duration of the SMTC window, wherein X1 is a positive integer; or
the on duration has a backward offset of X2 compared with the duration of the SMTC window, wherein X2 is a positive integer.

14. The method according to claim 12 or 13, further comprising:
transmitting indication information, wherein the indication information indicates the relationship between the on duration and the duration of the SMTC window.

15. A communication apparatus, wherein the apparatus is applicable to a terminal device, and the apparatus comprises:

a communication unit, configured to receive synchronization signal/physical broadcast channel block measurement timing configuration SMTC configuration information, wherein the SMTC configuration information comprises periodicity of an SMTC window and a start position of the SMTC window; and
a processing unit, configured to: determine a cycle period of discontinuous reception DRX based on the periodicity of the SMTC window, and
determine a start position of the DRX based on the start position of the SMTC window.

16. The apparatus according to claim 15, wherein the cycle period of the DRX is N times the periodicity of the SMTC window, and N is an integer.

17. The apparatus according to claim 16, wherein N is a default value or is configured by a network device.

18. The apparatus according to any one of claims 15 to 17, wherein

a relationship between the start position of the SMTC window and the start position of the DRX satisfies the following formula:

$$\text{drx-StartOffset} = \text{periodicityAndOffset} \bmod \text{drx-Cycle},$$

wherein
drx-StartOffset is the start position of the DRX, periodicityAndOffset is the start position of the SMTC window, drx-Cycle is the cycle period of the DRX, and mod is a modulo operation; or
a relationship between the start position of the SMTC window and the start position of the DRX satisfies the following formula:

$$\text{drx-StartOffset} = \text{periodicityAndOffset} \bmod \text{drx-Cycle} + \text{offset1},$$

wherein
offset1 is an offset greater than 0 and offset1 is indicated by the network device, or offset1 is determined based on the periodicity of the SMTC window or the cycle period of the DRX, or offset1 is a preset value; or
a relationship between the start position of the SMTC window and the start position of the DRX satisfies the following formula:

$$\text{drx-StartOffset} = \text{periodicityAndOffset} \bmod \text{drx-Cycle} - \text{offset2},$$

wherein
offset2 is an offset greater than 0 and offset2 is indicated by the network device, or offset2 is determined based on the periodicity of the SMTC window or the cycle period of the DRX, or offset2 is a preset value.

19. The apparatus according to any one of claims 15 to 18, wherein the SMTC configuration information further comprises duration of the SMTC window, and the processing unit is further configured to:
determine on duration in the DRX based on the duration of the SMTC window.

20. The apparatus according to claim 19, wherein a relationship between the on duration and the duration of the SMTC window is one of the following:

the on duration is the same as the duration of the SMTC window; or
the on duration is M times the duration of the SMTC window, wherein M is an integer; or
the on duration has a forward offset of X1 compared with the duration of the SMTC window, wherein X1 is a positive integer; or
the on duration has a backward offset of X2 compared with the duration of the SMTC window, wherein X2 is a positive integer.

21. The apparatus according to claim 19 or 20, wherein the communication unit is further configured to:

receive indication information, wherein the indication information indicates the relationship between the on duration and the duration of the SMTC window.

22. A communication apparatus, wherein the apparatus is applicable to a terminal device, and the apparatus comprises:

a communication unit, configured to transmit synchronization signal/physical broadcast channel block measurement timing configuration SMTC configuration information, wherein the SMTC configuration information comprises periodicity of an SMTC window and a start position of the SMTC window; and
a processing unit, configured to: determine a cycle period of discontinuous reception DRX based on the periodicity of the SMTC window, and
determine a start position of the DRX based on the start position of the SMTC window.

23. The apparatus according to claim 22, wherein the cycle period of the DRX is N times the periodicity of the SMTC window, and N is an integer.

24. The apparatus according to claim 23, wherein N is a default value or is configured by a network device.

25. The apparatus according to any one of claims 22 to 24, wherein

a relationship between the start position of the SMTC window and the start position of the DRX satisfies the following formula:

$$\text{drx-StartOffset} = \text{periodicityAndOffset} \bmod \text{drx-Cycle},$$

wherein
drx-StartOffset is the start position of the DRX, periodicityAndOffset is the start position of the SMTC window, drx-Cycle is the cycle period of the DRX, and mod is a modulo operation; or
a relationship between the start position of the SMTC window and the start position of the DRX satisfies the following formula:

$$\text{drx-StartOffset} = \text{periodicityAndOffset} \bmod \text{drx-Cycle} + \text{offset1},$$

wherein
offset1 is an offset greater than 0 and offset1 is indicated by the network device, or offset1 is determined based on the periodicity of the SMTC window or the cycle period of the DRX, or offset1 is a preset value; or
a relationship between the start position of the SMTC window and the start position of the DRX satisfies the following formula:

$$\text{drx-StartOffset} = \text{periodicityAndOffset} \bmod \text{drx-Cycle} - \text{offset2},$$

wherein
offset2 is an offset greater than 0 and offset2 is indicated by the network device, or offset2 is determined based on the cycle period of the DRX or the cycle period of the DRX, or offset2 is a preset value.

26. The apparatus according to any one of claims 22 to 25, wherein the SMTC configuration information further comprises duration of the SMTC window, and the processing unit is further configured to:
determine on duration in the DRX based on the duration of the SMTC window.

27. The apparatus according to claim 26, wherein a relationship between the on duration and the duration of the SMTC window is one of the following:

the on duration is the same as the duration of the SMTC window; or
the on duration is M times the duration of the SMTC window, wherein M is an integer; or
the on duration has a forward offset of X1 compared with the duration of the SMTC window, wherein X1 is a positive integer; or
the on duration has a backward offset of X2 compared with the duration of the SMTC window, wherein X2 is a positive integer.

28. The apparatus according to claim 26 or 27, wherein the communication unit is further configured to: transmit indication information, wherein the indication information indicates the relationship between the on duration and the duration of the SMTC window.

29. A computer-readable storage medium, wherein the computer storage medium stores computer-readable instructions, and when the computer-readable instructions are run on a communication apparatus, the method according to any one of claims 1 to 7 is performed, or the method according to any one of claims 8 to 14 is performed.

30. A computer program product, wherein when the computer program product runs on a device, the device is caused to perform the method according to any one of claims 1 to 7 or the method according to any one of claims 8 to 14.

DRX cycle (DRX cycle)

On Duration (active period)　　　　On Duration (active period)

FIG. 1

Terminal device — Transparent transmission satellite — Network device — Core network (CN) — DN

FIG. 2

Terminal device — Satellite carrying a network device — Core network (CN) — DN

FIG. 3

| Terminal device | Network device |
|---|---|

S401: SMTC configuration information

| S402: Determine DRX configuration information based on configuration information of an SMTC window | S403: Determine the DRX configuration information based on the configuration information of the SMTC window |
|---|---|

FIG. 4

FIG. 5

FIG. 6

SMTC window periodicity

DRX cycle

FIG. 7

Terminal
device

Network
device

S801: Determine a MAC CE,
where the MAC CE indicates
a start position of DRX

S802: MAC CE

S803: Determine the
start position of the DRX
based on the MAC CE

FIG. 8

| Start position of DRX | Byte 1 |
| Start position of the DRX | Byte 2 |

FIG. 9

| Start position of DRX | Byte 1 |

FIG. 10

| Offset of a start position of DRX | Byte 1 |

FIG. 11

| Start position of DRX | Byte 1 |
| Start position of the DRX | Byte 2 |
| Offset of a start position of On Duration in the DRX | Byte 3 |

FIG. 12

```
┌──────────┐                              ┌────────────────┐
│ Terminal │                              │ Network device │
│  device  │                              └────────────────┘
└──────────┘                                      │
     │                              ┌──────────────────────────┐
     │                              │ S1301: Determine a MAC    │
     │                              │ CE, where the MAC CE      │
     │                              │ indicates an SMTC window  │
     │                              └──────────────────────────┘
     │                                      │
     │          S1302: MAC CE               │
     │ ◄────────────────────────────────────│
     │                                      │
┌──────────────────────┐                    │
│ S1303: Determine the │                    │
│ SMTC window based    │                    │
│ on the MAC CE        │                    │
└──────────────────────┘                    │
     │                                      │
```

## FIG. 13

| Periodicity | Duration | Offset | Byte 1 |
|-------------|----------|--------|--------|
| Offset | | | Byte 2 |

## FIG. 14

| Offset | Byte 1 |
|--------|--------|

## FIG. 15

FIG. 16

FIG. 17

## INTERNATIONAL SEARCH REPORT

| International application No. |
|---|
| **PCT/CN2024/119380** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W,H04Q,H04M,H04L

Documentation searched other than minimum documentation to the extent that such documents are included in the fields searched

Electronic data base consulted during the international search (name of data base and, where practicable, search terms used)

CNABS, CNKI, CNTXT, VEN, ENTXT, WPABS, DWPI, 3GPP: 同步信号, 定时, 配置, 周期, 时长, 起始, 位置, 运算, 指示, 偏置, 预设值, 持续时间, synchronization signal, timing, configuration, period, duration, start, location, operation, indication, bias, preset value, duration

**C. DOCUMENTS CONSIDERED TO BE RELEVANT**

| Category* | Citation of document, with indication, where appropriate, of the relevant passages | Relevant to claim No. |
|---|---|---|
| A | CN 110943818 A (VIVO MOBILE COMMUNICATION CO., LTD.) 31 March 2020 (2020-03-31) description, paragraphs [0004]-[0066] | 1-30 |
| A | CN 114586417 A (GUANGDONG OPPO MOBILE TELECOMMUNICATIONS CORP., LTD.) 03 June 2022 (2022-06-03) entire document | 1-30 |
| A | CN 115226187 A (HUAWEI TECHNOLOGIES CO., LTD.) 21 October 2022 (2022-10-21) entire document | 1-30 |
| A | EP 4236439 A1 (INTEL CORP.) 30 August 2023 (2023-08-30) entire document | 1-30 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2024** | **09 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/119380**

| Patent document cited in search report | | | Publication date (day/month/year) | Patent family member(s) | | | Publication date (day/month/year) |
|---|---|---|---|---|---|---|---|
| CN | 110943818 | A | 31 March 2020 | WO | 2020063344 | A1 | 02 April 2020 |
| | | | | US | 2021204149 | A1 | 01 July 2021 |
| CN | 114586417 | A | 03 June 2022 | | None | | |
| CN | 115226187 | A | 21 October 2022 | | None | | |
| EP | 4236439 | A1 | 30 August 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311250193